Europäisches Patentamt

**European Patent Office**

**Office européen des brevets**

(19)

(11) Publication number: **0 029 840**
**B1**

(12) **EUROPEAN PATENT SPECIFICATION**

(45) Date of publication of patent specification: **11.04.84**

(51) Int. Cl.³: **B 65 G 39/10**

(21) Application number: **80901161.2**

(22) Date of filing: **15.05.80**

(86) International application number:
**PCT/US80/00598**

(87) International publication number:
**WO 80/02683 11.12.80 Gazette 80/28**

(54) **Idler roll and method for securing an idler roll cylinder to roll heads.**

(30) Priority: **04.06.79 US 45195**

(43) Date of publication of application:
**10.06.81 Bulletin 81/23**

(45) Publication of the grant of the patent:
**11.04.84 Bulletin 84/15**

(84) Designated Contracting States:
**DE FR GB**

(56) References cited:
**FR - A - 1 264 347**
**US - A - 1 160 592**
**US - A - 1 995 616**

(73) Proprietor: **CONTINENTAL CONVEYOR AND**
**EQUIPMENT COMPANY, INC.**
**Dept. 0015-WHB-6 500 South Main Street**
**Akron, OH 44318 (US)**

(72) Inventor: **HOOPER, Homer**
**PO Box 684**
**Winfield, AL 35594 (US)**
Inventor: **HOLLAND, R.B.**
**PO Box 260**
**Hodges, AL 35571 (US)**

(74) Representative: **von Kreisler, Alek, Dipl.-Chem.**
**et al,**
**Deichmannhaus am Hauptbahnhof**
**D-5000 Köln 1 (DE)**

Idler roll and method for securing an idler roll cylinder to roll heads

This invention relates to an idler roll embodying a roll cylinder having a roll head mounted within each end thereof, there being an annular, outwardly opening groove in and around the outer periphery of each said roll head facing the inner surface of said roll cylinder, and an inwardly extending, annular lock member formed at each end of said roll cylinder and pressed into said annular outwardly opening groove and to a method for securing an idler roll cylinder of an idler roll assembly to a pair of laterally spaced roll heads mounted within the respective ends of said roll cylinder comprising the steps of:

forming a circumferentially extending outwardly opening groove in and around the outer periphery of each said roll head axially inward of the outer end thereof and facing the end of said roll cylinder adjacent thereto, and

spin forming the outer end portions of said roll to form an integral inwardly extending, annular abutment as a lock member at each end thereof which is forced into the confines of said groove.

An idler roll of this type and made by such a process according to the prior art (FR—A—1 264 347) has two roll heads with annular outwardly opening grooves into which annular lock members formed at each end of the roll cylinder extend. In this manner the roll cylinder cannot move axially relative to the roll heads and the outer surface of the total idler roll becomes smooth. However, there is a certain danger of rotational or circumferential movement of the roll cylinder relative to the roll heads, if high driving forces act on the roll cylinder as it can occur in case of an idler roll in a belt conveyor.

It is the object of the invention to create an idler roll of the type mentioned above which obviates both relative rotation as well as relative axial motion.

To solve this object, the invention proposes that for use with an idler roll assembly for a belt conveyor there are provided cirumferentially spaced, outwardly opening recesses in the outer periphery of each said roll head facing the inner surface of said roll cylinder and receiving inwardly projecting lock elements formed in said roll cylinder and that said circumferentially spaced outwardly opening recesses merge into said annular groove and extend laterally of said groove.

This results in an idler roll that is economical to manufacture and very effective in its function. The idler roll can withstand considerable changes of torque without failure and is superior in its performance. The respective roll heads are fabricated with the annular grooves and the circumferentially spaced recesses that are laterally extending and spaced from the edges. Thereafter, conventionally cut lengths of roll cylinders are combined with the roll heads.

With the method according to the invention, there is no exposed joint between the roll cylinder and the roll head. The locking elements resulting from the deformation of the roll cylinder extend into the groove as well as into the recesses. Thus it is possible to do the deformation of the roll cylinder with respect to the groove and with respect to the recesses in one step with one type of forming rollers.

Idler roll assemblies and apparatus which may be employed to carry out our process are shown in the accompanying drawings in which:

FIG. 1 is a side elevation view, partly broken away and in section, with the part shown in section being taken generally along the line 1—1 of FIG. 2;

FIG. 2 is a sectional view taken generally along the line 2—2 of FIG. 1;

FIG. 3 is a fragmental, sectional view taken generally along the line 3—3 of FIG. 2;

FIG. 4 is a side elevational view showing one form of apparatus which may be employed to apply a forming pressure to the outer surface of the roll cylinder adjacent the ends thereof with the forming members being shown in the inoperative position;

FIG. 5 is an elevational view corresponding to FIG. 4 but showing the forming members in the operative position to apply a forming pressure to the ends of the roll cylinder; and

FIG. 6 is a diagrammatic view illustrating the relative positions of the forming members relative to the roll assembly.

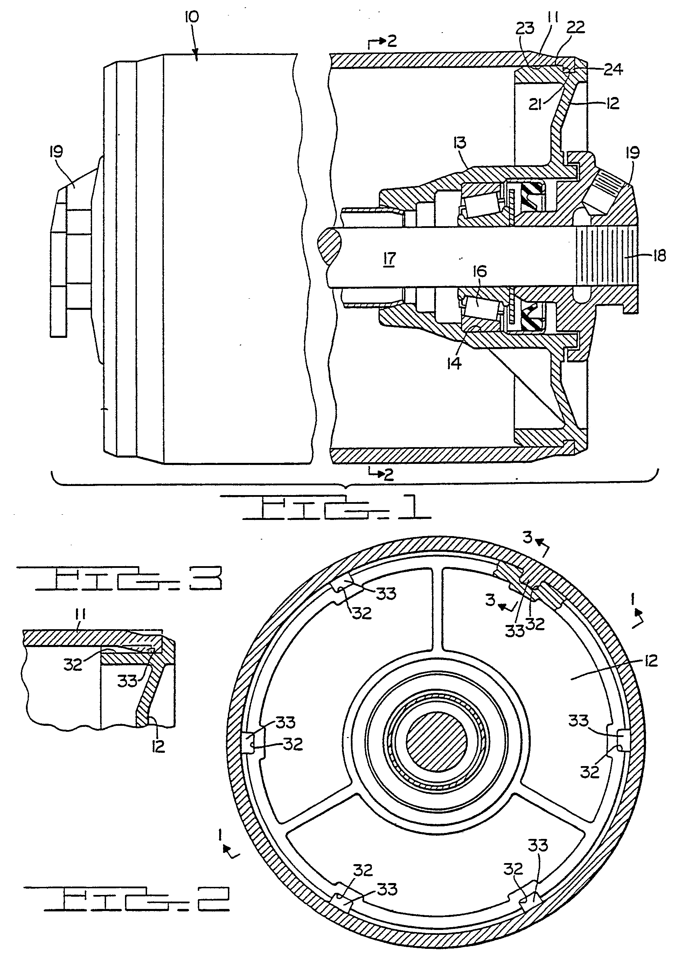

Referring now to the drawings for a better understanding of our invention, we show an idler roll 10 which is adapted for use with an idler roll assembly for supporting a belt conveyor in a conventional manner. The idler roll comprises a roll cylinder 11 having a roll head 12 mounted within each end thereof, as shown. Each head 12 is provided with an inwardly extending hub portion 13 which defines a bearing recess 14 for receiving bearing units indicated generally at 16. The idler roll 10 is thus supported by the bearing units 16 which are interposed between a supporting shaft 17 and the bearing recesses 14 in a manner well understood in the art to which our invention relates. As shown in FIG. 1, the shaft 17 extends through the roll 10 and is provided with a threaded end portion 18 for receiving internal threads of a supporting nut 19 in a conventional manner.

To secure the roll cylinder 11 to the roll heads 12, we form an annular, outwardly opening groove 21 in and around the outer periphery 22 of each roll head 12 in position to face the inner surface 23 of the roll cylinder 11 as shown in FIG. 1. With the annular grooves 21 thus provided in the outer periphery of the heads 12, the heads 12 are positioned within the roll cylinder 11. It will be understood that at the time the roll cylinder 11 is positioned over the roll heads 12, it is in the form of a section of a cylinder which is cut the desired length. That is, it is not necessary to machine or profile the inner surface of the roll cylinder 11 adjacent the end thereof to accommodate the roll head 12. Accordingly, at the time the roll cylinder 11 receives the roll head 12, the wall of the roll cylinder is of a full thickness from one end of the roll cylinder to the other. That is to say, to provide the roll cylinder 11, one merely takes a length of tubular stock and then cuts the same into sections of the desired lengths.

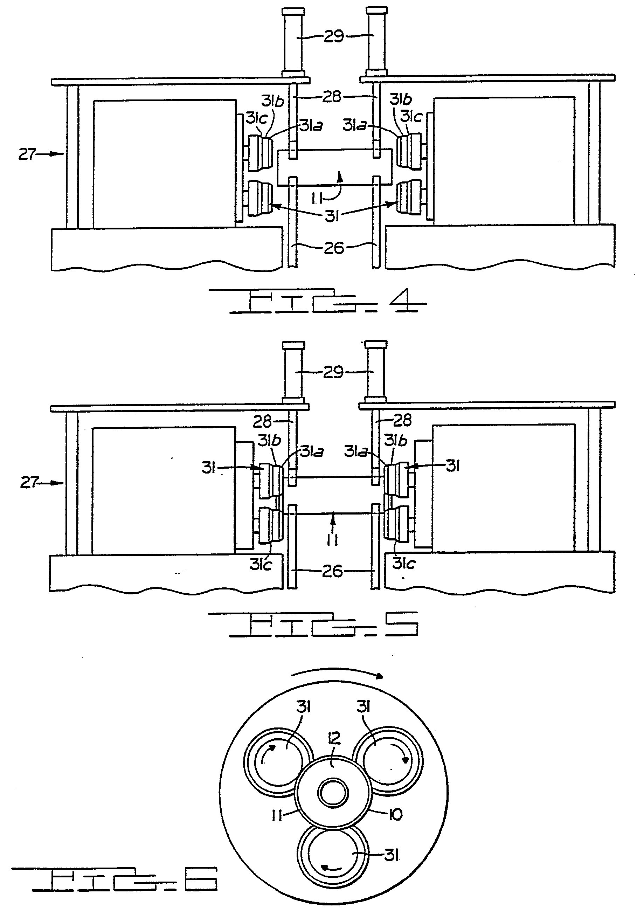

With the heads 12 positioned in the ends of the cylindrical shell 11, a forming pressure is applied to the outer surface of the roll cylinder 11 adjacent each end thereof to form an inwardly extending, annular lock member 24 which is rolled or forced into the annular groove 21 with a press fit, as shown in FIG. 1. In FIG. 4 we show the roll cylinder 11 as being supported by stationary rails 26 of a forming machine indicated generally at 27. The roll cylinder 11 is held down by clamp sections 28 which are carried by fluid pressure operated units 29. The forming machine 27 is provided with suitable forming rollers 31. These rollers are mounted on a spinning head and are contoured so that there is an entrance angle 31$^a$, a straight section 31$^b$ and a contoured step 31$^c$ set to force the end of the tube into the annular groove. In FIG. 4 the forming rollers 31 are shown in the outer, inoperative position while FIG. 5 shows the forming rollers 31 as being in the inner, operative position whereby a forming pressure is applied to the outer surface of the roll cylinder 11 adjacent each end thereof. In view of the fact that the forming apparatus 27 may be of a conventional type, well known in the art to which our invention relates, no further description thereof is deemed necessary.

As shown in FIGS. 2 and 3, angularly spaced, outwardly opening recesses 32 are formed in the outer periphery 22 of each roll head 12 in position to face the inner surface of the roll cylinder 11. Accordingly, by applying a forming pressure, by forming rollers 31, to the outer surface of the roll cylinder 11, the end of the roll cylinder 11 is moved inwardly from the dotted line position shown in FIG. 3 to the solid line position to thus form inwardly projecting locking elements 33 which are pressed into each of the recesses 32 to limit relative rotation between the roll cylinder 11 and its roll head 12. It will thus be seen that the inwardly projecting locking elements 33 are formed concomitantly with formation of the inwardly extending annular lock member 24 as the forming rollers 31 form the end of the roll cylinder 11 to the solid line position shown in FIG. 3. As shown in FIGS. 2 and 3, the angularly spaced, outwardly opening recesses 32 extend laterally of the annular outwardly opening groove 21. That is, the angularly spaced, outwardly opening recesses 32 extend generally perpendicular to the annular, outwardly opening groove 24.

From the foregoing, it will be seen that we have devised an improved conveyor idler roll assembly and method of producing the same. By providing the annular, outwardly opening groove 21 and the angularly spaced, outwardly opening recesses 32 in the outer periphery of the roll head 12, relative axial movement between the roll cylinder and the roll heads is limited and at the same time relative rotary movement between the roll cylinder and the roll head is limited. Accordingly, the roll head remains at a fixed position within the end of the roll cylinder and cannot move deeper into the roll cylinder or move outwardly thereof and at the same time there is no rotation of the head within the roll cylinder. By providing the annular, outwardly opening groove 21 and applying a forming pressure to the outer surface of the roll cylinder adjacent each end to form the inwardly extending annular lock member 24, we provide smoother ends for the roll cylinder and at the same time eliminate all rough or sharp edges which could cut or cause wear to the conveyor belt. Also, by forming the ends of the roll cylinder in accordance with our invention, the appearance of the roll assembly is greatly improved and at the same time production cost is reduced. Also, by eliminating the necessity of profiling or machining the inner surface of the roller cylinder, the roll cylinder is full thickness from one end to the other, thus eliminating thin end areas which often result in separation of the head from the roll shell and damage to the belt conveyor. Furthermore, by providing the annular, outwardly opening groove 21 and the angularly spaced, outwardly opening recesses 32 in the rigid head casting rather than in the roll cylinder, better concentricity of the roll cylinder outer diameter and the axial center line of the supporting bearings is obtained. That is, the outer periphery 22 of the roll head 12 can be turned at the same time the bearing recess 14 is turned, thus making it possible to use commercial tubing without profiling or machining the inner surface of the roll cylinder.

**Claims**

1. Idler roll embodying a roll cylinder having a roll head mounted within each end thereof, there being an annular, outwardly opening groove (21) in and around the outer periphery of each said roll head (12) facing the inner surface of said roll cylinder (11), and an inwardly extending, annular lock member (24) formed at each end of said roll cylinder (11) and pressed into said annular outwardly opening groove (21), characterized in that for use with an idler roll assembly for a belt conveyor there are provided circumferentially spaced, outwardly opening recesses (32) in the outer periphery of each said roll head (12) facing the inner surface of said roll cylinder (11) and receiving inwardly projecting lock elements (33)

formed in said roll cylinder (11) and that said circumferentially spaced outwardly opening recesses (32) merge into said annular groove (21) and extend laterally of said groove (21).

2. Method for securing an idler roll cylinder of an idler roll assembly to a pair of laterally spaced roll heads mounted within the respective ends of said roll cylinders comprising the steps of:

forming a circumferentially extending outwardly opening groove (21) in and around the outer periphery of each said roll head (12) axially inward of the outer end thereof and facing the end of said roll cylinder (11) adjacent thereto, and

spin forming the outer end portions of said roll to form an integral inwardly extending, annular abutment as a lock member at each end thereof which is forced into the confines of said groove characterized by forming in addition to said groove (21) a plurality of circumferentially spaced, outwardly opening recesses (32) in the outer periphery of said roll head (12) facing the inner surface of said roll cylinder and extending laterally of said circumferentially extending outwardly opening groove (21), and forming during said spin forming step concomitantly inwardly projecting abutments as lock elements (33) which are pressed into said circumferentially spaced recesses (32).

## Revendications

1. Rouleau monté fou comportant un cylindre de rouleau présentant un flasque monté dans chaque extrémité de celui-ci, une gorge annulaire s'ouvrant vers l'extérieur (21) étant située dans et autour de la périphérie extérieure de chaque flasque (12) en regard de la surface interne dudit cylindre de rouleau (11), et un élément de verrouillage annulaire s'étendant vers l'intérieur (24) formé à chaque extrémité dudit cylindre de rouleau (11) et pressé dans ladite gorge annulaire ouverte vers l'extérieur (21), caractérisé en ce que pour l'utilisation avec un assemblage de rouleau fou pour un convoyeur à courroie, on a prévu des chambrages s'ouvrant vers l'extérieur (32) circonférentiellement espacés, dans la périphérie externe de chaque flasque (12) faisant face à la surface interne dudit cylindre de rouleau (11) et recevant des éléments de verrouillage en saillie vers l'intérieur (33) formés dans ledit cylindre de rouleau (11) et que lesdits chambrages s'ouvrant vers l'extérieur (32) circonférentiellement espacés, se confondent dans ladite gorge annulaire (21) et se prolongent latéralement à partir de ladite gorge (21).

2. Méthode pour fixer un cylindre de rouleau fou à un assemblage de rouleau monté fou une paire de flasques latéralement espacés montés dans les extrémités respectives desdits cylindres de rouleaux, comprenant les étapes de:

— former une gorge s'ouvrant vers l'extérieur, s'étendant circonférentiellement (21) dans et autour de la périphérie extérieure de chaque flasque (12) axialement vers l'intérieur de l'extrémité extérieure de ce dernier et faisant face à l'extrémité dudit cylindre de rouleau (11) qui lui est adjacente, et

— former par façonnage au tour les zones d'extrémité extérieures dudit rouleau pour former une butée annulaire d'un seul tenant, se prolongeant vers l'intérieur sous la forme d'un élément de verrouillage à chacune de ses extrémités, qu l'on force dans les limites de cette gorge, caractérisée par le formage, en plus de ladite gorge (21), d'une pluralité de chambrages s'ouvrant vers l'extérieur (32) circonférentiellement espacés, dans la péripherie externe dudit flasque (12) faisant face à la surface interne dudit cylindre de rouleau et se prolongeant latéralement à partir de ladite gorge s'ouvrant vers l'extérieur (21) s'étendant circonférentiellement, et le formage, pendant ledit stade de formage par façonnage au tour, de butées en saillie vers l'intérieur de façon concomittante, sous la forme d'éléments de verrouillage (33) qui sont pressés dans lesdits chambrages circonférentiellement espacés (32).

## Patentansprüche

1. Mitlaufrolle, bestehend aus einem Rollenzylinder, in dessen Enden je ein Rollenkopf angeordnet ist, mit einer in dem Außenumfang jedes Rollenkopfes (12) ausgebildeten, diesen umgebenden und der Innenfläche des Rollenzylinders (11) zugewandten ringförmigen, nach außen offenen Nut (21) und mit einem einwärts ragenden ringförmigen Halteteil (24), der an jedem Ende des Rollenzylinders (11) ausgebildet und in die ringförmige, nach außen offene Nut (21) hineingepreßt ist, dadurch gekennzeichnet, daß zur Verwendung mit einer Mitlaufrollenanordnung für einen Gurtförderer in dem Außenumfang jedes Rollenkopfes (12) mit umfangsmäßigem Abstand angeordnete, nach außen offene Vertiefungen (32) vorgesehen sind, die der Innenfläche des Rollenzylinders (11) zugewandt sind und einwärts ragende Halteelemente (33) aufnehmen, die in dem Rollenzylinder (11) ausgebildet sind und daß die mit umfangsmäßigem Abstand angeordneten, nach außen offenen Vertiefungen (32) in die ringförmige Nut (21) eingelassen und zu der Nut (21) quergerichtet sind.

2. Verfahren zur Befestigung eines Mitlaufrollenzylinders einer Mitlaufrollenanordnung an zwei in den jeweiligen Enden des Rollenzylinders mit seitlichem Abstand angeordneten Rollenköpfen mit den Schritten:

Ausbilden einer umfangsmäßig verlaufenden nach außen offenen Nut (21) in dem und um den Außenumfang jedes Rollenkopfes (12), wobei die Nut zu dem äußeren Ende des Rollenkopfes nach innen versetzt und dem ihr benachbarten Ende des Rollenzylinders (11) zugewandt ist und

Formdrehen der äußeren Endteile der Rolle zur Anformung eines einwärts ragenden Flanschringes als Halteteil an jedes ihrer Enden, der in den Bereich der Nut hineingedrückt wird, dadurch gekennzeichnet, daß man in dem Außenumfang des Rollenkopfes (12) zusätzlich zu der Nut (21) mehrere mit umfangsmäßigem Abstand angeordnete, nach außen offene Vertiefungen (32) ausbildet, die der Innenfläche des Rollenzylinders zugewandt und zu der umfangsmäßig verlaufenden, nach außen offenen Nut (21) quergerichtet sind und daß man während des Formdrehschrittes gleichzeitig einwärts ragende Vorsprünge als Halteelemente (33) formt, die in die mit umfangsmäßigem Abstand angeordneten Vertiefungen (32) hineingepreßt werden.

FIG-1

FIG-3

FIG-2

0 029 840

FIG. 4

FIG. 5

FIG. 6

2